# EUROPEAN PATENT APPLICATION

(11) **EP 1 413 560 A1**
(43) Date of publication of application: **28.04.2004**
(21) Application number: 02079430.1
(22) Date of filing: 22.10.2002
(51) Int. Cl.: C03C 17/00, C03C 17/36, B32B 17/10, B60J 1/02, H05B 3/86

(54) **Electrically heatable solar reflective coated glazings with windows in coating configured, shaped and dimensioned in such a way as to minimise inhomogeneous heating**

(71) Applicant: GLAVERBEL, 1170 Bruxelles (BE)
(72) Inventor: The designation of the inventor has not yet been filed
(74) Representative: Farmer, Guy

(57) **Abstract**

A vehicle glazing panel having an electrically heatable radiation-reflective coating layer, at least two bus bars adapted to relay electrical power to the coating layer and at least a window, in the coating layer, permeable to electromagnetic radiations, which, when submitted to a power of 1000 W/m² during 4 minutes, presents in a portion of the glazing panel delimited by the bus bars and not including the bus bars tips and their close periphery, a maximum temperature and a minimum temperature, such that the difference between the maximum temperature of the glazing panel with the window and the maximum temperature of the same glazing panel without window does not exceed 25°C.

This may be used to minimise perturbations to the heating of the glazing caused by the presence of the window permeable to electromagnetic radiations and/or provide more even heating over the entire windscreen.

## Description

This invention relates to glazing panels and particularly but not exclusively to a vehicle windscreen having an electrically heatable coating layer provided with a window permeable to electromagnetic radiations.

Although the invention is described herein with particular reference to car windscreens it will be understood that it has applications to other vehicle glazing panels, for example car rear windows and side windows, or train windows.

Coating layers are well known not only to provide an electrically heatable element but also to modify the optical properties of glass, particularly to reduce the proportion of incident solar energy which is transmitted through the glass whilst allowing passage of sufficient visible light to ensure good visibility. This can reduce overheating of the interior of the vehicle in summer and is commonly achieved by reflection of incident solar radiation in the infra-red portion of the spectrum. Infrared reflecting and other radiation-reflective coating layers may increase the selectivity of the glazing panel i.e. the ratio of the proportion of incident visible radiation transmitted through the glazing to the proportion of incident solar energy transmitted through the glazing. Many radiation-reflective coating layers have the intrinsic property of being electrically heatable.

Sensors, emitters or antennas arranged inside a car may rely on passage of electromagnetic waves through the windscreen. For example, an electromagnetic data signal for automatic payment at the toll gates used on the motorways may pass through the windscreen. However, passage of such electromagnetic signals may be hindered by the presence of a radiation-reflective coating and, consequently, a window in the form of a gap or hole may be provided in a radiation-reflective coating layer specifically to allow the passage of electromagnetic radiations through that portion of the glazing. This principle is applicable to allowing passage of any electromagnetic wave through a glazing panel and particularly, but not exclusively, signals using infra-red wavelengths. The term window permeable to electromagnetic radiations as used herein refers to a portion of the surface area of a glazing adapted to permit electromagnetic transmission therethrough.

When a windscreen does not have a window permeable to electromagnetic radiations, the heating effect may be relatively uniform over the entire windscreen. However when a window permeable to electromagnetic radiations is incorporated in the heatable coating layer, it may cause several perturbations in the heating pattern of the windscreen, creating cold zones which may take longer to de-mist or de-ice than in the scenario without a window permeable to electromagnetic radiations, and creating hot spots which may damage or even burn the heatable coating layer and/or the adjacent PVB layer, or burn somebody touching the windscreen.

Whilst it would of course be possible to reduce the electrical power supplied to bus bars so as to reduce the temperature of the "hot spots" this would of course reduce the temperature of the other parts of the windscreen at the same time and increase the time taken to de-mist or de-ice the overall windscreen.

According to one aspect, the present invention provides a glazing panel as defined in claim 1.

The measurement conditions specified in claim 1, i.e. under a power of 1000 W/m² during 4 minutes, are intended to confirm if a glazing panel satisfies the conditions of the invention. They do not at all limit the present invention to these particular conditions: a glazing panel according to the present invention may be used at different powers, voltages and under different conditions. As an example, a windscreen may be used at powers of between 700 and 3000 W/m², and at voltages of 12V, 24V, 30V, 36V, 42V or 220V. The temperature measurements are carried out at room temperature and under natural convection. The maximum and minimum temperatures of the glazing panel are measured in a portion of the glazing panel delimited by the bus bars and not including the bus bars tips and their close periphery wherein a hot spot is generated. This is to avoid to take into account the hot spots generated at the tips of the bus bars in the definition of the maximum temperature of the glazing panel.

Preferably, the difference between the maximum temperature of the glazing panel with the window permeable to electromagnetic radiations and the maximum temperature of the same glazing panel without window permeable to electromagnetic radiations does not exceed 25°C, and still preferably, does not exceed 15°C. A glazing panel according to the invention has thus, among others, the advantage of avoiding a too high maximum temperature, whilst allowing the electromagnetic radiations to pass through.

Preferably, the difference between the maximum temperature and the minimum temperature of the glazing panel does not exceed 35°C, and still preferably, does not exceed 20°C. This allows a relatively uniform heating over the entire windscreen, for a good defrosting or demisting function and for avoiding dangerous hot spots.

The heatable coating layer may be a sputtered deposited coating, for example having the general structure antireflective dielectric layer / optional barrier layer / silver containing conductive layer / optional barrier layer / antireflective dielectric layer / optional barrier / silver containing conductive layer / optional barrier layer / antireflective dielectric layer. Such coatings are used in vehicle glazings to increase the selectivity of the glazing (i.e. the ratio of the proportion of visible light transmitted to the proportion of incident solar energy transmitted) to reduce the solar heating or greenhouse effect in the vehicle. Alternatively, the heatable coating layer may have a single silver containing layer of the general structure antireflective dielectric layer / optional barrier layer / silver containing conductive layer / optional barrier layer / antireflective dielectric layer. A further possibility is for the heatable coating layer to comprise a pyrolytically deposited layer based, for example, on doped tin oxide.

The heatable coating layer may be sandwiched between two sheets of glass or it may be an exposed coating layer, for example on a monolithic glazing panel. The heatable coating layer may be deposited directly on a surface of the glazing or it may be carried on a film, for example a film of PET incorporated in the glazing.

Several configurations, designs and sizes of windows permeable to electromagnetic radiations may be suitable according to the present invention.

The window may be a disk having a diameter of 30 mm to 80 mm, or from 40 mm to 70 mm and preferably 50 mm. Alternatively, the window may be a substantially circular zone with no coating layer, having an area in the range between 7 and 50 cm², or preferably between 12 and 40 cm², or still preferably an area of 20 cm². The circular or substantially circular shape is advantageous as it reduces the appearance of hot spots around the window permeable to electromagnetic radiations.

When the glazing panel comprises two windows permeable to electromagnetic radiations, they are preferably separated by a distance of at least 100 mm or of 125 mm to 1000 mm, or of 150 mm to 500 mm and still preferably, of 200 mm. They are preferably positioned symmetrically on both sides of an axis Y₀ which divides the glazing panel along its largest dimension in two equal parts. Windscreens may be provided with two windows so as to be mounted indifferently on cars fitted for left-hand drive or right-hand drive.

The glazing panel may also comprise three windows permeable to electromagnetic radiations, from which one is substantially a rectangle with rounded corners having a size in the range of 50 to 100 mm wide and 25 to 75 mm high or of 70 to 80 mm wide and 40 to 60 mm high, and preferably 75 mm wide and 55 mm high. The rounded corners are advantageous as they reduce the overheating at each corner of the substantially rectangular window.

Preferably, the window permeable to electromagnetic radiations is a portion of the windscreen that does not have the heatable coating layer or is a portion of the windscreen wherein the coating layer is absent from a pattern of dots. The window may be entirely surrounded by the heatable coating layer or may be bounded to the edge of the glazing panel where no heatable coating layer is present and thus be partially surrounded by the heatable coating layer.

Where the window permeable to electromagnetic radiations is a portion of the windscreen wherein the coating layer is absent from a pattern of dots, the dots may be arranged linearly or in alternate rows and they may have substantially the same size. These dots form uncoated apertures in the coating layer. Advantageously the dots have each a diameter of at least 5 mm, and preferably 6 mm. Such a pattern may improve the transmission ratio of the electromagnetic signal through the window.

According to another aspect, the present invention provides a method of controlling temperature distribution over a heated glazing panel as defined in Claim 16. The method may be used to prevent or reduce the phenomena of hot spots.

Embodiments of the invention will now be described, by way of examples only, with reference to figures 1 to 6. Figures 1 and 2 show simulations of a heated car windscreen. Figures 3 and 4 are infrared pictures of heated windscreens according to the present invention. Figure 5 shows a simulation of a portion of a heated car windscreen according to the present invention and figure 6 is an infrared picture of a heated windscreen that is not part of the present invention.

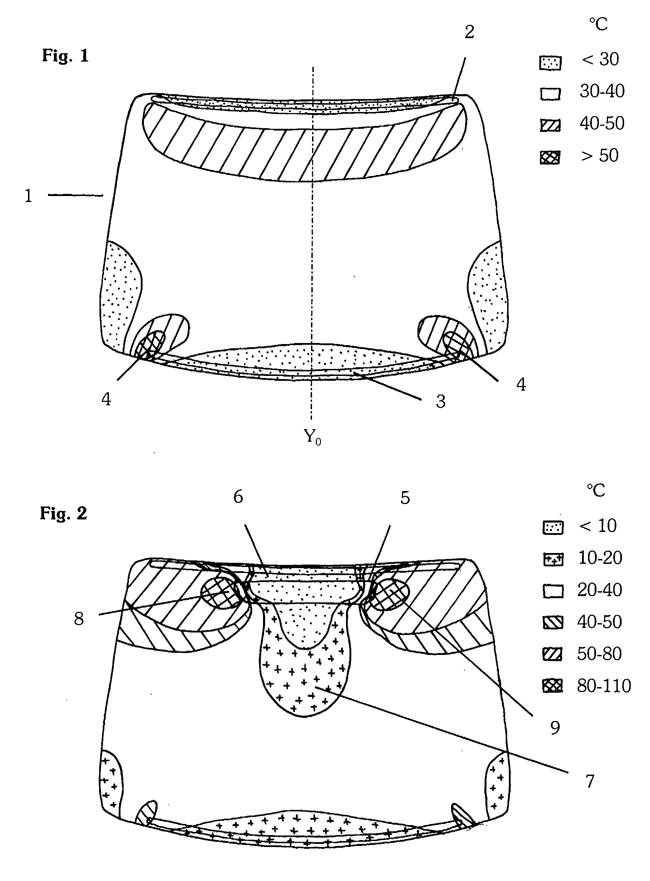

Figure 1 shows a simulation of a heated car windscreen 1 having an electrically heatable coating layer over its entire surface supplied with electrical power by a first bus bar 2 and second bus bar 3. The windscreen is a laminated structure comprising two sheets of glass laminated together by means of a sheet of PVB, the electrically heatable coating layer and the bus bars being sandwiched between the two sheets of glass. This windscreen does not have a window permeable to electromagnetic radiations and the heating effect is relatively uniform over the entire windscreen, the greyscale in the figure indicating the approximate relative temperature in centigrade of each portion of the glazing. It can be seen that a slight "hot spot" 4 is created around each end of the second bus bar 3.

Figure 2 shows a simulation similar to that of figure 1 save that a window permeable to electromagnetic radiations 5 is incorporated in the arrangement. The window permeable to electromagnetic radiations is a portion of the windscreen that does not have the heatable coating layer. As can be seen from the representation of the temperature at different points of the windscreen the window permeable to electromagnetic radiations causes the following perturbations:
- an upper portion of the windscreen 6 at and around the window is not heated at all;
- a central portion 7 is heated but to a lesser extent than if the window is not present - consequently this portion will take longer to de-mist or de-ice than in the scenario without a window permeable to electromagnetic radiations;
- hot spots 8 and 9 are created adjacent to the window - this is undesirable as such local overheating may damage or even burn the heatable coating layer and/or the adjacent PVB layer. It is also important to ensure that no portion of the windscreen is heated to such an extent that its temperature could cause burns to somebody touching it.

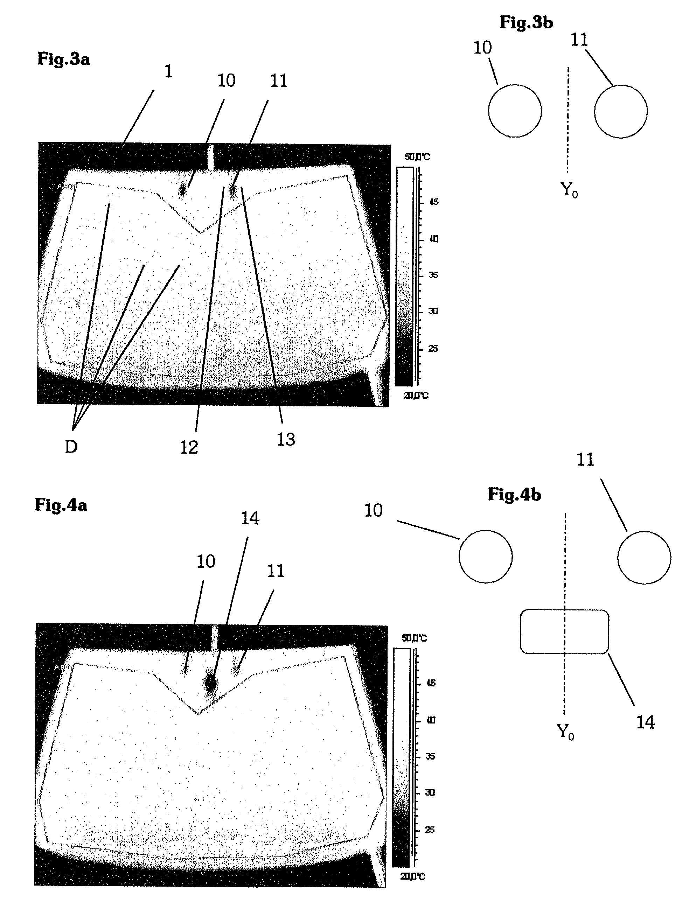

Both figures 1 and 2, as well as further figures 3a, 4a, 5 and 6a, are intended to give an indication of the *relative* temperatures at different portions of the glazing panel. The absolute temperatures will depend, inter alia, upon the nature of the heatable coating layer, the electrical voltage difference between the two bus bars (i.e. the power supplied to the windscreen), and the room temperature and convection conditions. In addition, the figures are intended to give an indication of the "stable" or "equilibrium" temperature distribution once the glazing panel has been heated for sufficient time to reach its maximum heated temperature. The scale of relative temperatures varies from one figure to another.

Windscreens illustrated in figures 3a, 4a and 6a comprise an inner sheet of glass laminated to an outer sheet of glass by means of a sheet of PVB. A heatable coating layer and bus bars are arranged between the two sheets of glass. The top and bottom bus bars are made out of silver (10x0.1mm) whereas the side bus bar is a 5x0.2mm copper strip. After assembly, the heat-up speed and homogeneity was followed with an IR camera. The voltage was maintained at 42V and the experiment was run at room temperature (21±2°C) under natural convection. Figures 3a, 4a and 6a are pictures after 4 minutes heat-up time. Some defects D are visible on the windscreens; they should not be considered in this analysis.

### Example 1: figure 3 (2 disks)

The windscreen 1 of figure 3a comprises two windows 10, 11 permeable to electromagnetic radiations. They are disks of 50 mm diameter, symmetrically positioned on both side of the Yₒ axis, with a distance between them of 200 mm. This is schematically shown in figure 3b. Top of the disks are at 70 mm from the top edge of the glass.

The two disks have limited impact on the overall heating pattern. There are two hot spots 12, 13 (reaching 50°C after 4 minutes) of limited spread on each side of the disks. Such hot spots are acceptable. No significant cool zone is generated.

### Example 2: figure 4 (2 disks + rectangle)

The windscreen of figure 4a comprises two windows 10, 11 as described in example 1 and further comprises a rectangular window with rounded corners 14, of 75 mm width and 55 mm high. The arrangement of the windows is shown in figure 4b.

Compared to the two disks layout of example 1, the further rectangular window intensifies the hot spots (58°C after 4 minutes). This effect is reduced if the relative distance between the 2 disks is increased.

### Example 3: Rectangular window (not illustrated)

A windscreen comprises two rectangular windows of 120 x 70 mm located symmetrically on both side of the Yₒ axis. Top of the windows are at 70 mm from the top edge of the glass.

Major hot spots between the two windows and on each side of them appear. Nevertheless, no cold spot is generated. The vision area of the windscreen remains homogenously heated.

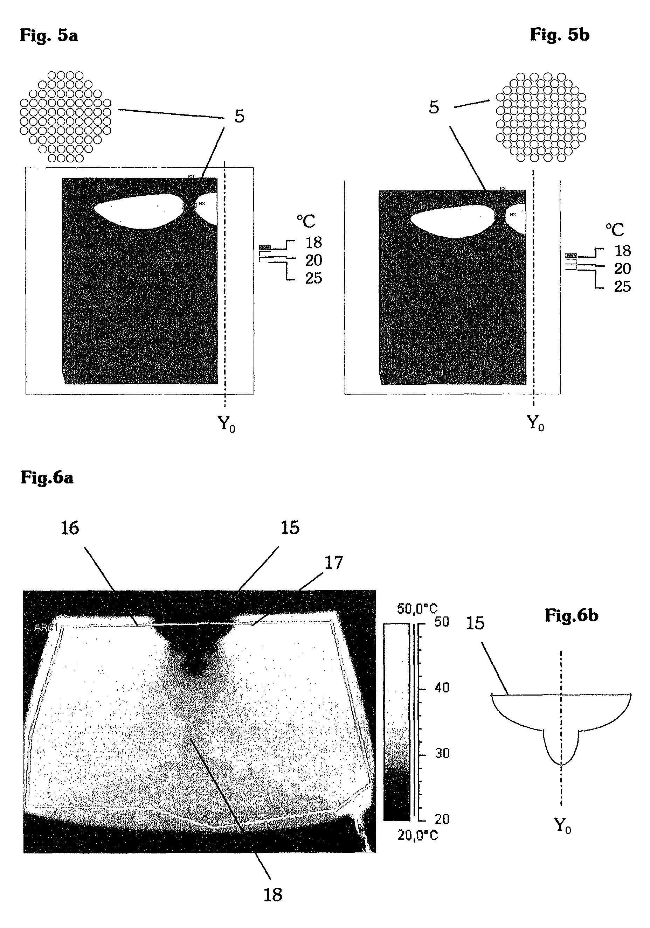

### Example 4: figure 5 (window with pattern of dots)

Figure 5 shows a simulation of a portion of a heated car windscreen having an electrically heatable coating layer over its entire surface supplied with electrical power by two bus bars, with a voltage of 42V, after 5 minutes. The windscreen is a laminated structure comprising two sheets of glass laminated together by means of a sheet of PVB, the electrically heatable coating layer and the bus bars being sandwiched between the two sheets of glass. Two windows permeable to electromagnetic radiations 5 are incorporated in the arrangement. They are positioned symmetrically on both side of the Yₒ axis and the distance between them is 200 mm. Only one of these windows is visible in figure 5. The windows permeable to electromagnetic radiations are disks with a diameter of 7 cm wherein the coating layer is absent from a pattern of regular dots having each a diameter of 6 mm. These dots are uncoated apertures in the coating layer.

The windows permeable to electromagnetic radiations have a very little impact on the heating pattern of the windscreen. Comparison between figures 5a and 5b shows that the heating pattern is similar if the dots are arranged linearly or in alternate rows.

### Counterexample: figure 6

The windscreen of figure 6a comprises a single window 15 permeable to electromagnetic radiations, with a specified shape as shown in figure 6b.

The window generates major distortions in the temperature pattern. Two major hot spots 16, 17 are observed on each side of the window (±90°C after 4 minutes) while the area 18 below the window and extending over a large area of the heatable coated windscreen is significantly cooler. This type of window will impair the defrosting or demisting function of the heatable coating.

The following table summarises the difference between the maximum temperature of the exemplified glazing panels with windows permeable to electromagnetic radiations and the maximum temperature of the same glazing panels without window (column 2). It also shows the difference between the maximum temperature and the minimum temperature of the glazing panels described hereinabove (column 3).

| | Δ T°max with window - T°max without window | Δ T°min - T°max |
|---|---|---|
| No window | - | 4°C |
| Example 1 (2 disks) | 10°C | 18°C |
| Example 2 (2 disks + rectangle) | 19°C | 28°C |
| Example 3 (2 rectangles) | 23°C | 31°C |
| Example 4 (2 disks with dots) | ∼4°C | < 18°C |
| Counterexample | 48°C | 60.5°C |

## Claims

1. A vehicle glazing panel comprising
(i) an electrically heatable radiation-reflective coating layer,
(ii) at least two bus bars adapted to relay electrical power to the coating layer, and
(iii) at least a window in the coating layer, permeable to electromagnetic radiations,
which, when submitted to a power of 1000 W/m² during 4 minutes, presents in a portion of the glazing panel delimited by the bus bars and not including the bus bars tips and their close periphery, a maximum temperature and a minimum temperature, **characterised in that** the difference between the maximum temperature of the glazing panel with the window and the maximum temperature of the same glazing panel without window does not exceed 25°C.

2. A vehicle glazing panel in accordance with claim 1, in which the difference between the maximum temperature of the glazing panel with the window and the maximum temperature of the same glazing panel without window does not exceed 15°C.

3. A vehicle glazing panel in accordance with claim 1 or claim 2, in which the difference between the maximum temperature and the minimum temperature of the glazing panel does not exceed 35°C.

4. A vehicle glazing panel in accordance with claim 3, in which the difference between the maximum temperature and the minimum temperature of the glazing panel does not exceed 20°C.

5. A vehicle glazing panel in accordance with any preceding claim, in which the window is a disk wherein no coating layer is present.

6. A vehicle glazing panel in accordance with claim 5, in which the window has a diameter comprised between 30 and 80 mm.

7. A vehicle glazing panel in accordance with claim 5 or claim 6, in which the window has a diameter comprised between 40 and 70 mm.

8. A vehicle glazing panel in accordance with claims 1 to 4, in which the window is a substantially circular zone without coating layer having an area of between 7 and 50 cm².

9. A vehicle glazing panel in accordance with claim 8, in which the window has an area of between 12 and 40 cm².

10. A vehicle glazing panel in accordance with any preceding claim, comprising two windows permeable to electromagnetic radiations, in which the two windows are separated by a distance of at least 100 mm.

11. A vehicle glazing panel in accordance with claim 10, in which the two windows are separated by a distance comprised between 150 and 500 mm.

12. A vehicle glazing panel in accordance with claims 1 to 7, comprising three windows permeable to electromagnetic radiations, in which one window is substantially a rectangle with rounded corners wherein no coating layer is present.

13. A vehicle glazing panel in accordance with claims 12, in which the substantially rectangular window has a size in the range of 50 to 100 mm width and 25 to 75 mm high.

14. A vehicle glazing panel in accordance with any preceding claim, in which the window permeable to electromagnetic radiations is entirely surrounded by the electrically heatable radiation-reflective coating layer.

15. A vehicle glazing panel in accordance with claims 1 to 4, in which the window is a zone wherein the coating layer is absent from a pattern of dots arranged linearly or in alternate rows.

16. A vehicle glazing panel in accordance with claim 15, in which the dots without the coating layer have diameters of at least 5 mm.

17. A vehicle glazing panel in accordance with any preceding claim in which the glazing panel is an automotive windscreen.

18. A method of reducing the phenomena of hot spots in a glazing panel provided with an electrically heatable radiation-reflective coating layer and at least a window in the coating layer, permeable to electromagnetic radiations, by adjusting the design and size of the window as claimed in any of claims 5 to 16.
